# EUROPÄISCHE PATENTSCHRIFT

(11) **EP 2 251 960 B1**
(45) Veröffentlichungstag und Bekanntmachung des Hinweises auf die Patenterteilung: **13.06.2018**
(21) Anmeldenummer: 10161638.1
(22) Anmeldetag: 30.04.2010
(51) Int. Cl.: H02K 3/50

(54) **Wickelkopf für eine elektrische Maschine und Verfahren zu dessen Herstellung**
End winding for an electrical machine, and method for its production
Tête de bobine pour une machine électrique et procédé de sa fabrication

(30) Priorität: 13.05.2009 DE 102009021063
(43) Veröffentlichungstag der Anmeldung: 17.11.2010
(73) Patentinhaber: General Electric Technology GmbH, 5400 Baden (CH)
(72) Erfinder: Bänziger, Matthias, 5442 Fislisbach (CH); Hediger, Daniel, 5504 Othmarsingen (CH)
(74) Vertreter: General Electric Technology GmbH

(56) Entgegenhaltungen:
- EP-A1- 1 279 838
- EP-A2- 0 375 419
- DE-A1-102004 016 454
- US-A1- 2005 275 306

## Beschreibung

### TECHNISCHES GEBIET

Die vorliegende Erfindung betrifft einen Wickelkopf für eine elektrische Maschine mit Rotor und Stator, insbesondere einen Elektromotor oder einen Generator, vorzugsweise in einer Kraftwerksanlage. Des Weiteren betrifft die Erfindung ein Verfahren zur Montage eines Wickelkopfes.

### STAND DER TECHNIK

Bei grossen Maschinen dieser Art, insbesondere zur Stromproduktion in einer Kraftwerksanlage, besitzt der Stator eine Statorwicklung, die durch mehrere Wicklungsstäbe gebildet ist. Diese Wicklungsstäbe, die in der Regel als sogenannte Roebelstäbe ausgebildet sind, erstrecken sich dabei in axialer Richtung in einem Statorkern. Zumindest an einer axialen Stirnseite dieses Statorkerns sind die Wicklungsstäbe mit ihren Enden aus dem Statorkern herausgeführt. Üblicherweise sind die herausgeführten Wicklungsstabenden so in radialer und in Umfangsrichtung umgebogen und angeordnet, dass sie an der Kernstirnseite einen kegelstumpfförmigen oder trichterförmigen Wickelkopf ausbilden, dessen Durchmesser mit zunehmendem Abstand von der Kernstirnseite zunimmt.

Die Statorwicklung der elektrischen Maschine ist mit mehreren Anschlussklemmen versehen, um elektrische Energie in die Statorwicklung einspeisen und/oder aus der Statorwicklung abführen zu können, je nachdem ob die elektrische Maschine als Elektromotor oder als Generator ausgestaltet ist bzw. betrieben wird. Hierzu müssen ausgewählte Wicklungsstäbe, sogenannte Phasenwicklungsstäbe, mit diesen Anschlussklemmen verbunden werden.

Dies kann beispielsweise im Wickelkopf mittels Phasenverbinderstäben, sogenannten Rundverbindern, erfolgen, die jeweils einen der Phasenwicklungsstäbe im Bereich der Kernstirnseite mit einer der Anschlussklemmen verbinden.

In der Regel erstrecken sich die Phasenverbinderstäbe zwischen ihren Enden ringsegmentförmig in der Umfangsrichtung des Stators, wobei sie sich radial innen an einer oder mehreren Stützen, normalerweise in Form von Abstützwinkeln, abstützen, die im Bereich der Kernstirnseite in Umfangsrichtung verteilt angeordnet sind. An der Aussenseite dieser Abstützwinkel sind die Rundverbinder angeordnet und häufig an den Abstützwinkeln befestigt. In der Regel befinden sich mehrere Rundverbinder axial (bezüglich Statorachse) hintereinander zwischen Axialanschlägen der Abstützwinkel. Zweckmässig sind zwischen benachbarten Rundverbindern im Bereich der Stützen jeweils Distanzkörper angeordnet, an denen die Rundverbinder axial zur Anlage kommen. Die Dimensionierung der Distanzkörper ist dabei zweckmässig so abgestimmt, dass sich nach der Montage in axialer Richtung ein Presssitz für die zwischen den Axialanschlägen angeordneten Rundverbinder ergibt. Hierdurch wird eine effektive Fixierung der Rundverbinder an den Abstützwinkeln erreicht, was aufgrund der im Betrieb der elektrischen Maschine auftretenden Belastungen erforderlich ist. Üblicherweise sind die Rundverbinder an ihrer Aussenseite mit einer Isolierung versehen, in der Regel einem Kunstharz. Beim Aushärten des Harzes und aufgrund der im Betrieb der elektrischen Maschinen auftretenden Erwärmung und Vibrationen kann es zu Setzungserscheinungen kommen, bei denen die Isolierungen der Rundverbinder geringfügig in axialer Richtung nachgeben können. Hierdurch nimmt die axiale Verpressung im Presssitz zwischen den Axialanschlägen der Stützen stark ab, was im Dauerbetrieb der jeweiligen Maschine dazu führen kann, dass sich die axialen Haltekräfte reduzieren. Derartige Konstruktionen und Verbesserungen hinsichtlich der Ausbildung der Distanzkörper und der Halterung der Rundverbinder sind beispielsweise aus der DE 102004016454 bekannt.

Aus der WO 2008/138704 ist es bekannt, dass es möglich ist, die Rundverbinder mit Kordeln an den Abstützwinkeln zu befestigen und einen gesamten Abstützkorb, gebildet aus über den Umfang verteilten Abstützwinkeln, welche durch einen äußeren und einen inneren Abstützring verbunden sind, sowie die auf der Außenseite der Abstützwinkel angeordneten und daran befestigten Rundverbinder als Ganzes in ein Imprägniermittelbad einzubringen.

Die EP 0 375 419 A2 beschreibt eine parallele Leiterringstruktur für eine dynamoelektrische Maschine. Streifenverbinder sind an bestimmten Stellen um die Achse des Statorkerns angebracht und verbinden die parallelen leitenden Ringstrukturen. Verlängerungsmittel für Phasenleiter verbinden die Anschlussstücke mit den Leiterringen.

Die EP 1 279 838 A1 beschreibt ein Verfahren zur Herstellung einer unlösbaren Verbindung zweier Werkstücke. Entlang eines flächigen Bereichs werden in einem Teil Lochungen vorgesehen, in welche stiftartige Elemente mit ihrem einen Ende eingeführt und fest angeordnet werden. Dann wird das andere Teil mit kongruent angeordneten Lochungen über die Enden der stiftartigen Elemente aufgesetzt und die flächigen Bereiche werden aneinandergefügt. Zusätzlich wird ein härtender Klebstoff in die Lochungen injiziert.

### DARSTELLUNG DER ERFINDUNG

Aufgabe der Erfindung ist es unter anderem, einen verbesserten Wickelkopf für eine elektrische Maschine zur Verfügung zu stellen, wobei die Verbesserung insbesondere darin bestehen soll, den Wickelkopf stabiler und trotzdem einfach montierbar zu gestalten.

Die Erfindung richtet sich entsprechend auf einen Wickelkopf für einen Stator einer elektrischen Maschine, wobei der Wickelkopf wenigstens zwei Rundverbinder umfasst, über welche der Strom von den Wicklungsstäben des Stators abgeführt wird. Typischerweise umfasst der Wickelkopf eine Vielzahl von Rundverbindern, wobei diese der Anzahl der Phasen entsprechend zu Anschlüssen zusammengefasst werden. Der Wickelkopf umfasst zusätzlich eine Mehrzahl von Abstützwinkeln, über welche der Wickelkopf am Stator befestigt ist, die Winkel bilden zusammen mit den Rundverbindern einen eigentlichen Abstützkorb. Dabei verfügen die Rundverbinder typischerweise über einen radialen Abschnitt, an dessen Ende jeweils ein Phasenverbindungsblock angeordnet ist. Der Phasenverbindungsblock ist typischerweise ein würfelförmiger oder quaderförmiger Metallblock, in welchem der Rundverbinder eingelassen ist. Wenigstens zwei Phasenverbindungsblöcke einer Phase sind beim Wickelkopf in Umfangsrichtung nebeneinander angeordnet und erfindungsgemäß sind weiterhin die benachbarten Phasenverbindungsblöcke über wenigstens ein stiftförmiges Element verbunden, welches in Ausnehmungen in den einander zugewandten Seitenflächen der Phasenverbindungsblöcke wenigstens teilweise stoffschlüssig befestigt ist.

Es kann ein derartiges stiftförmiges Element vorhanden sein, es kann aber auch eine Mehrzahl von parallel angeordneten derartigen stiftförmigen Elementen angeordnet sein.

Bei vielen Generatoren werden die parallel verlaufenden Rundverbinder und die
entsprechenden flexiblen Verbindungen so weit wie möglich bis zu den Durchführungen durch das Gehäuse getrennt geführt. Erst direkt bei der Durchführung durch das Gehäuse werden die parallelen Pfade in einen einzigen zusammengeführt. Bevorzugtermassen gibt es für jeden Rundverbinder einen Phasenverbindungsblock, es ist aber alternativ auch möglich, zwei oder mehr Rundverbinder auf einen einzigen Phasenverbindungsblock zu führen.
Fast alle der Rundverbinder verfügen über einen genügend langen Umfangsabschnitt, um wenigstens an einer Stelle an einem Abstützwinkel befestigt zu sein. Es gibt aber auch häufig einen oder einige wenige Rundverbinder, welche aus geometrischen Gründen an keinem Abstützwinkel befestigt sind. Bei einem Stator von einem Durchmesser von 3 m können Rundverbinder ohne weiteres so befestigt sein, dass zwischen der letzten Befestigung und dem Ende des Rundverbinders beim Phasenverbindungsblock 50 cm -70 cm nicht direkt befestigt sind, sondern nur über Distanzhalter oder Verbindungselemente zwischen den Rundverbindern fixiert sind. Auch gibt es Rundverbinder, welche nur an einer Stelle an einem Abstützwinkel befestigt sind. Diese Distanzhalter oder Verbindungselemente, welche auch an den radialen Abschnitten kurz vor den Phasenverbindungsblöcken angeordnet sein können, sind keine wohl definierten und stabilen Verbindungen. Es handelt sich nämlich typischerweise bei den Distanzhaltern, bei den Verbindungselementen sowie beim Isolationsmaterial der Rundverbinder um Materialien, welche unter Einwirkung von Wärme nachgeben können. Insbesondere also wenn beim Betrieb die Temperatur ansteigt, sind die Rundverbinder unter Umständen nicht mehr genügend in ihrer räumlichen Orientierung fixiert. Tatsächlich ergibt sich daraus eine Beweglichkeit der Rundverbinder in axialer, radialer sowie auch tangentialer Richtung.
Aufgrund dieser Befestigungscharakteristik ist es möglich, dass sich Schaukelbewegungen der Rundverbinder auf der Befestigung ausbilden können, wobei die Eigenfrequenzen aufgrund der geringen Steifigkeit sehr niedrig sein können. Eine entsprechende Reibung und Abnützung der Isolation und eine zunehmende Schwächung der Befestigung sowie der Lötstellen sind entsprechend problematisch, können überraschenderweise aber weitgehend vermieden werden, wenn, wie gemäß der Erfindung vorgeschlagen, die Phasenverbindungsblöcke, die umfangsmäßig nebeneinander angeordnet sind, steif miteinander verbunden werden.
Die vorgeschlagene Befestigung der beiden Phasenverbindungsblöcke erfolgt dabei ganz gezielt so, dass eine erste vorläufige relative Orientierung vorgegeben wird, wenn der Verbindungsstift in die Ausnehmungen der beiden benachbarten Blöcke eingeschoben ist. Der Verbindungsstift ist dann drehbar und verschieblich und entsprechend ist es in einer ersten Montagephase möglich, die Rundverbinder anschließend noch auszurichten und in der endgültigen gewünschten Position soweit wie möglich zu fixieren.
Entsprechend ist es auch bevorzugt, wenn weder die Innenfläche der Ausnehmungen noch die zylindrische Außenfläche des Verbindungsstifts ein Gewinde aufweisen.
Erst wenn diese definitive Orientierung der Rundverbinder erreicht und fixiert ist, wird in einem zweiten Schritt die Verbindung der benachbarten Phasenverbindungsblöcke fixiert, indem die stoffschlüssige Verbindung aufgebaut wird. Dies erfolgt typischerweise so, dass ein entsprechendes Material (im Sinne eines Adhäsivs) eingebracht wird.
Eine erste bevorzugte Ausführungsform der Erfindung ist dadurch gekennzeichnet, dass das stiftförmige Element als Verbindungsstift mit kreiszylindrischer Außenfläche ausgebildet ist, und die Ausnehmungen als zylindrische Sacklöcher ausgebildet sind, und dass die Befestigung des Verbindungsstifts im wesentlichen ausschließlich stoffschlüssig ist. Durch diese Ausbildung besteht die oben angesprochene Beweglichkeit in Umfangsrichtung respektive tangentialer Richtung, sowie auch teilweise in radialer respektive axialer Richtung, was die Ausrichtung der Rundverbinder vor der stoffschlüssigen Befestigung ermöglicht. Der Verbindungsstift kann aber auch (axiale) Rillen respektive Vorsprünge in der Umfangsfläche aufweisen, welche gegebenenfalls mit entsprechenden komplementären Strukturen in der Innenfläche der Ausnehmungen korrespondieren (Schlüssel-Schloss Prinzip). Die Querschnittsfläche des Verbindungsstifts kann entsprechend ein Kreis sein, oval oder eine andere rundliche Form, oder aber auch dreieckig, rechteckig, quadratisch, sechseckig, oder generell mehreckig mit gleichen oder unterschiedlichen Seitenlängen sein, wobei die Ecken abgerundet sein können.
Eine weitere bevorzugte Ausführungsform ist dadurch gekennzeichnet, dass der Wickelkopf für drei Phasen ausgelegt ist und drei oder sechs Paare von Phasenverbindungsblöcken aufweist, welche miteinander jeweils über ein stiftförmiges Element verbunden sind. Vorzugsweise sind sechs Paare von Phasenverbindungsblöcken vorhanden, und pro Phase jeweils zwei Paare von Phasenverbindungsblöcken vorhanden, welche vorzugsweise in axialer Richtung hintereinander angeordnet sind.
Das bevorzugtermassen kreiszylinderförmige stiftförmige Element kann an der Stirnseite Vertiefungen und/oder Rillen, beispielsweise eine Mehrzahl von sternförmigen Rillen aufweisen. Dies vorzugsweise in Kombination und/oder Verbindung mit in der Umfangsfläche des Elements angeordneten Vertiefungen und/oder Rillen, welche insbesondere bevorzugt an der Stirnseite beginnend in axialer Richtung des stiftförmigen Elementes eine Länge aufweisen, welche kürzer ist, vorzugsweise wenigstens 2 mm oder 5 mm kürzer, als die Tiefe der Ausnehmung. Die Rillen können gleichermaßen oder zusätzlich im/am Innenraum der Ausnehmung angeordnet sein. Diese Rillen dienen dazu, das Material zur Ausbildung der stoffschlüssigen Verbindung aufzunehmen und um eine möglichst große Oberfläche mit diesem zu benetzen.

Vorzugsweise ist das stiftförmige Element einstückig ausgebildet.
Weiterhin vorzugsweise basiert das stiftförmige Element auf einem metallischen oder einem isolierenden Werkstoff oder einer Kombination solcher Materialien. Das stiftförmige Element kann beispielsweise aus Keramik oder aus Kunststoff bestehen oder eine oberflächliche Beschichtung aus einem solchen Material aufweisen, insbesondere kann es gänzlich oder teilweise aus glasfaserverstärktem Kunststoff bestehen.
Eine bevorzugte Ausführungsform ist dadurch gekennzeichnet, dass das stiftförmige Element als Verbindungsstift mit kreiszylindrischer Außenfläche ausgebildet ist, und die Ausnehmungen als zylindrische Sacklöcher ausgebildet sind.
Generell erweist es sich bei der typischen Größenauslegung von Generatoren zur Stromerzeugung als vorteilhaft, wenn der Außendurchmesser des Verbindungsstifts im Bereich von 0,01 mm - 2 mm geringer ist als der Innendurchmesser der Ausnehmung, so dass ein genügendes Spiel vorhanden ist, welches die oben genannte Ausrichtung vor dem Erzeugen der stoffschlüssigen Verbindung ermöglicht.
Weiterhin ist es bevorzugt, wenn die Ausnehmungen eine Eindringtiefe für den Verbindungsstift im Bereich von 5 mm - 40 mm, vorzugsweise im Bereich von 10 mm - 30 mm aufweisen.
Des weiteren ist es bevorzugt, wenn der Verbindungsstift eine Länge im Bereich von 10 mm - 80 mm, vorzugsweise im Bereich von 20 mm - 50 mm aufweist. Des weiteren ist es bevorzugt, wenn der Verbindungsstift einen Durchmesser im Bereich von 5 mm - 60 mm, vorzugsweise im Bereich von 20 mm - 40 mm aufweist.
Eine weitere bevorzugte Ausführungsform ist dadurch gekennzeichnet, dass die Ausnehmungen als Sacklöcher in den Phasenverbindungsblöcken ausgebildet sind, und dass in den Bodenbereich der Sacklöcher ein von außen zugänglicher Anschlusskanal mündet. Dieser Anschlusskanal ermöglicht es, von außen Material zur Erzeugung der stoffschlüssigen Verbindung im zweiten Montageschritt einzubringen.
Dabei weist vorzugsweise der Bodenbereich einen Aufnahmeraum auf, in welchen das stiftförmige Element, selbst wenn es vollständig in die Ausnehmung eingeschoben ist, nicht hineinragt. Dieser Aufnahmeraum kann beispielsweise als konisch zulaufender Abschnitt auf dem Boden des Sacklochs ausgebildet sein, kann aber auch in Form von Rillen oder anderen Vertiefungen ausgebildet sein. Der Aufnahmeraum dient zur Aufnahme und/oder Verteilung des Materials zur Erzeugung der stoffschlüssigen Verbindung und ist insbesondere in Kombination mit Rillen und/oder Vertiefungen im Verbindungsstift und/oder den weiteren Wandungen der Ausnehmung vorteilhaft.
Der Anschlusskanal kann dabei, wie weiterhin bevorzugt, über Mittel verfügen, mit Hilfe welcher eine Einbringungshilfe (beispielsweise ein Schlauch zum Einspritzen) für das Material für die stoffschlüssige Befestigung am jeweiligen Phasenverbindungsblock für die Befestigung des stiftförmigen Elementes befestigt werden kann. Dabei kann es sich vorzugsweise beim Mittel um ein in der Innenwand des Anschlusskanals angeordnetes Innengewinde handeln.
Das stiftförmige Element ist bevorzugtermassen unter Zuhilfenahme eines aushärtenden Kunststoffmaterials in den Ausnehmungen befestigt, wobei es sich beim aushärtenden Kunststoffmaterial vorzugsweise um ein kalt oder unter Einwirkung von Hitze aushärtendes Epoxidharz handelt.
Zusätzlich können, gemäß einer weiteren bevorzugten Ausführungsform, die radialen Abschnitte von jeweils zu benachbart angeordneten Phasenverbindungsblöcken geführten Rundverbindern über wenigstens ein Verbindungselement verbunden sein. Es kann sich beim Verbindungselement vorzugsweise um Wicklungen aus Kordeln und/oder Streifen, insbesondere vorzugsweise aus glasfaserverstärktem Kunststoffmaterial, handeln. So kann eine weitergehende Stabilisierung der Rundverbinder bewirkt werden.
Zur Verbindung von zwei benachbarten Phasenverbindungsblöcken kann wenigstens ein Verbindungsstift angeordnet sein, dessen Hauptachse im wesentlichen tangential zum Umfang des Stators angeordnet ist.
Des weiteren betrifft die vorliegende Erfindung ein Verfahren zur Montage eines Wickelkopfes, wie er oben beschrieben wurde. Das Verfahren ist vorzugsweise dadurch gekennzeichnet, dass in die Ausnehmung des ersten Phasenverbindungsblocks ein stiftförmiges Element eingeschoben wird, und dass auf den aus dem ersten Phasenverbindungsblock herausragenden Teil dieses stiftförmigen Elementes anschließend die Ausnehmung des zweiten benachbarten Phasenverbindungsblocks aufgeschoben wird, dass anschließend die Rundverbindungen angeordnet, ausgerichtet und in ihrer endgültigen räumlichen Anordnung fixiert werden. Dabei wird ein Verbindungsmaterial zur stoffschlüssigen Verbindung der stiftförmigen Elemente entweder vor dem Einschieben des Elements in die Ausnehmungen eingebracht oder am Element angebracht und anschließend (bevorzugt unter Einwirkung von Hitze) ausgehärtet und/oder ein Verbindungsmaterial zur stoffschlüssigen Verbindung der stiftförmigen Elemente über in den Bodenbereich der vorzugsweise als Sacklöcher ausgebildeten Ausnehmungen mündende Anschlusskanäle eingebracht.
Das Verfahren ist gemäß einer weiteren bevorzugten Ausführungsform dadurch gekennzeichnet, dass der Bodenbereich der Sacklöcher einen Aufnahmeraum aufweist, in welchen das stiftförmige Element selbst im vollständig in die Ausnehmung eingeschobenen Zustand nicht hineinragt, und dass dieser Aufnahmeraum sowie gegebenenfalls im stiftförmigen Element und/oder in der Innenfläche der Ausnehmung angeordnete Rillen und/oder Vertiefungen mit dem Verbindungsmaterial im wesentlichen aufgefüllt werden.
Es kann sich vorzugsweise für die Durchführung des Verfahrens beim Verbindungsmaterial um ein Kunststoffmaterial handeln, vorzugsweise um ein aushärtendes Kunststoffmaterial, insbesondere bevorzugt um ein kalt härtendes Epoxidharz.
Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine axiale Ansicht auf eine Kernstirnseite von Teilen einer Wicklung eines Stators;
- Fig. 2: eine axiale Ansicht auf ein Paar von Phasenverbindungsblöcken und deren Verbindung zu den Rundverbindern;
- Fig. 3: eine axiale Ansicht auf ein paar von Phasenverbindungsblöcken, die erfindungsgemäß miteinander verbunden sind; und
- Fig. 4: seitliche Ansichten (links), Ansichten auf die Stirnseite (mitte) und eine Schnittdarstellung entlang der Linie B (rechts) eines Verbindungsstifts.

### BESCHREIBUNG BEVORZUGTER AUSFÜHRUNGSFORMEN

Eine elektrische Maschine umfasst zumindest einen Stator und einen darin drehbar gelagerten Rotor. Beispielsweise handelt es sich bei der elektrischen Maschine um einen Elektromotor und/oder um einen Generator, insbesondere um eine Wechselstrommaschine. Die hier in Betracht kommenden elektrischen Maschinen sind für relativ grosse Leistungen konzipiert und dementsprechend relativ gross dimensioniert. Eine bevorzugte Anwendung derartiger Maschinen erfolgt beispielsweise in einer Kraftwerksanlage zur Stromproduktion.

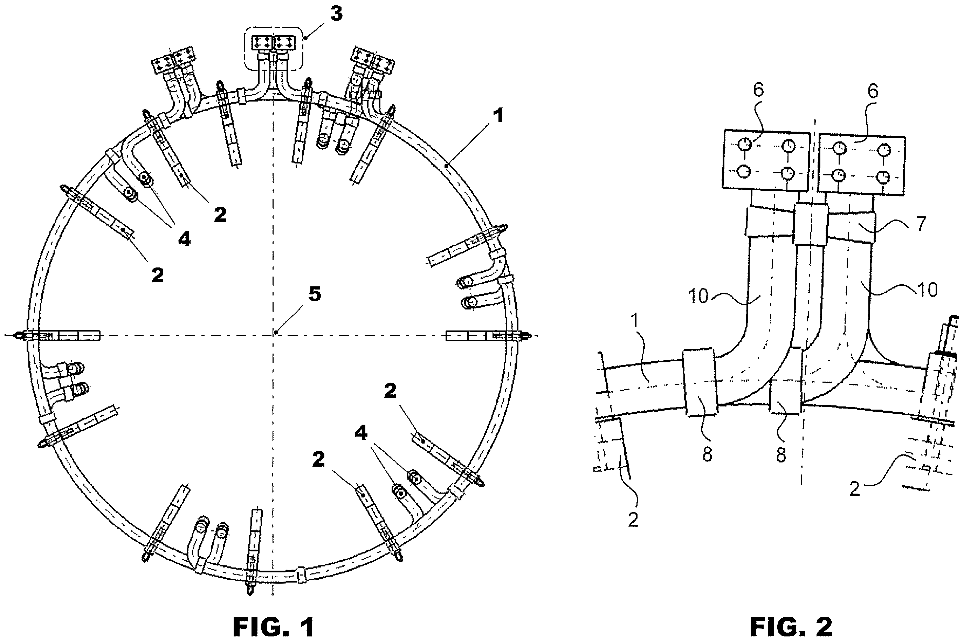

Der Stator besitzt einen Statorkern und eine Statorwicklung. Diese Statorwicklung ist aus einer Vielzahl von Wicklungsstäben aufgebaut, die sich im Statorkern in axialer Richtung, also beispielsweise in Figur 1 senkrecht zur Zeichnungsebene, und somit parallel zur Rotationsachse des Rotors erstrecken. Die Wicklungsstäbe, die insbesondere als Roebelstäbe ausgeführt sein können, sind in Figur 1 nicht dargestellt.

Zumindest an einer in Fig. 1 dem Betrachter zugewandten axialen Stirnseite des Statorkerns sind die Wicklungsstäbe mit ihren Enden aus dem Statorkern herausgeführt. Vorzugsweise werden die aus dem Statorkern herausgeführten Enden der Wicklungsstäbe so umgebogen und angeordnet, dass sie an der Kernstirnseite einen hier nicht dargestellten Wickelkopf ausbilden. Ein derartiger Wickelkopf besitzt in der Regel die Form eines sich mit zunehmendem Axialabstand von der Kernstirnseite aufweitenden Kegelstumpfs. Innerhalb des Wickelkopfs sind die Wicklungsstabenden fest miteinander verbunden, wodurch der Wickelkopf im Hinblick auf radial von aussen nach innen wirkende Druckkräfte wie ein Gewölbe reagiert und die auftretenden Kräfte in Umfangsrichtung ableiten kann. Gleichzeitig können dadurch auch extrem hohe von der Kernstirnseite weggerichtete axiale Kräfte am Aussenumfang des Wickelkopfs in diesen eingeleitet werden. Diese Bauweise ermöglicht es, die Wicklungsstäbe im Statorkern mit hohen axialen Zugkräften vorzuspannen bzw. um die im Betrieb der Maschine 1 auftretenden Belastungen aufnehmen zu können.

Die Statorwicklung ist mit mehreren Anschlussklemmen oder Anschlüssen 3 versehen, über die elektrische Energie in die Maschine eingeleitet werden kann (bei einem Elektromotor oder bei einem Elektromotor-Betriebszustand) oder von der Maschine abgeführt werden kann (bei einem Generator oder bei einem Generator-Betriebszustand). Bei der Darstellung gemäss Fig. 1 sind nur drei derartige Anschlüsse 3 erkennbar; es können auch mehr oder weniger Anschlussklemmen 3 vorhanden sein. Die drei Anschlüsse 3 repräsentieren die drei typischerweise als u, v, und w bezeichneten Phasen des eingeleiteten respektive ausgekoppelten Stroms.

Von der Gesamtheit aller Wicklungsstäbe sind einige ausgewählte Wicklungsstäbe, sogenannte "Phasenwicklungsstäbe", jeweils mit einem der Anschlüsse 3 elektrisch leitend verbunden. In diesem Fall gibt es zwölf derartige Phasenwicklungsstäbe, die abgegriffen werden. Diese Verbindung erfolgt im Bereich der Kernstirnseite, und zwar mit Hilfe von Rundverbindern 1. Dabei ist jeder dafür vorgesehene (Phasen-)Stab am jeweiligen Kopf über einen eigenen Rundverbinder 1 (konkret über einen Verbindungsabschnitt 4) mit dem jeweiligen Anschluss 3 elektrisch leitend verbunden.

Bei jedem der drei in Figur 1 dargestellten Anschlüsse 3 läuft je ein Rundverbinder 1 über einen radialen Abschnitt 10 (vergleiche Figur 2) auf einen Phasenverbindungsblock 6. Jeweils zwei Phasenverbindungsblöcke 6 für die gleiche Phase sind in Umfangsrichtung nahe nebeneinander angeordnet. In in Bezug auf die Stator-Achse axial hintereinander versetzter Weise sind jeweils zwei Paare von solchen Phasenverbindungsblöcken angeordnet, das heißt, es gibt insgesamt 12 Phasenverbindungsblöcke 6 wobei nur die vorderen sechs in Figur 1 sichtbar sind, und die hinteren sechs verdeckt sind. Bei jedem Anschluss 3 gibt es also ein vorderes Paar von Phasenverbindungsblöcken 6 und ein hinteres Paar von Phasenverbindungsblöcken 6.

Die Rundverbinder 1 sind beispielsweise als Hohlleiter ausgebildet, wobei die Hohlleiter einen kreisförmigen, ovalen oder auch anders abgerundeten Außen-Querschnitt, aber auch quadratischen oder eckigen wie beispielsweise rechteckigen Außen-Querschnitt aufweisen können. Der Hohlraum im Inneren kann wiederum kreisförmig oder eckig ausgebildet sein, wobei auch ein kreisförmiger Außenquerschnitt mit einem quadratischen Innenquerschnitt kombiniert sein kann.

Da die zum Anschluss an die Anschlussklemmen 3 vorgesehenen Wicklungsstäbe entlang der Kernstirnseite in Umfangsrichtung verteilt angeordnet sind und sich die Anschlüsse 3 für eine verbesserte Zugänglichkeit zweckmässig in einem begrenzten Umfangssegment befinden, besitzen die Rundverbinder 1 in Umfangsrichtung unterschiedliche Ausdehnungen, um die verschiedenen Abstände zwischen den jeweiligen Wicklungsstäben und den Anschlüssen 3 zu überbrücken. Wie aus Fig. 1 deutlich hervorgeht, besitzen daher die meisten Rundverbinder 1 zwischen ihren Enden eine ringsegmentförmige Gestalt und erstrecken sich bezüglich der Rotationsachse 5 in Umfangsrichtung des Stators. Bei jedem dieser Anschlüsse folgen nach radial außen in der Regel flexible Verbindungen (gewebeartige Strukturen aus elektrisch leitendem Material), über welche der elektrische Strom anschließend über Durchführungen durch das Gehäuse abgeführt wird. Dabei können jeweils für jeden einzelnen Phasenverbindungsblock 6 eine oder mehrere solcher flexiblen Verbindungen vorhanden sein. Es ist aber auch möglich, für das vordere respektive für das hintere Paar von Phasenverbindungsblöcken 6 jeweils nur eine flexible Verbindung vorzusehen.

Wie bereits eingangs erläutert, wird bei derartig angeordneten und untereinander verbundenen Rundverbindern 1 insbesondere bei Einwirkung von hoher Temperatur beim Betrieb keine genügende Stabilität der Rundverbinder 1 gewährleistet. Mit anderen Worten ist die gesamte Konstruktion des Wicklungskopfes mit dem Abstützkorb häufig nicht genügend stabilisiert.

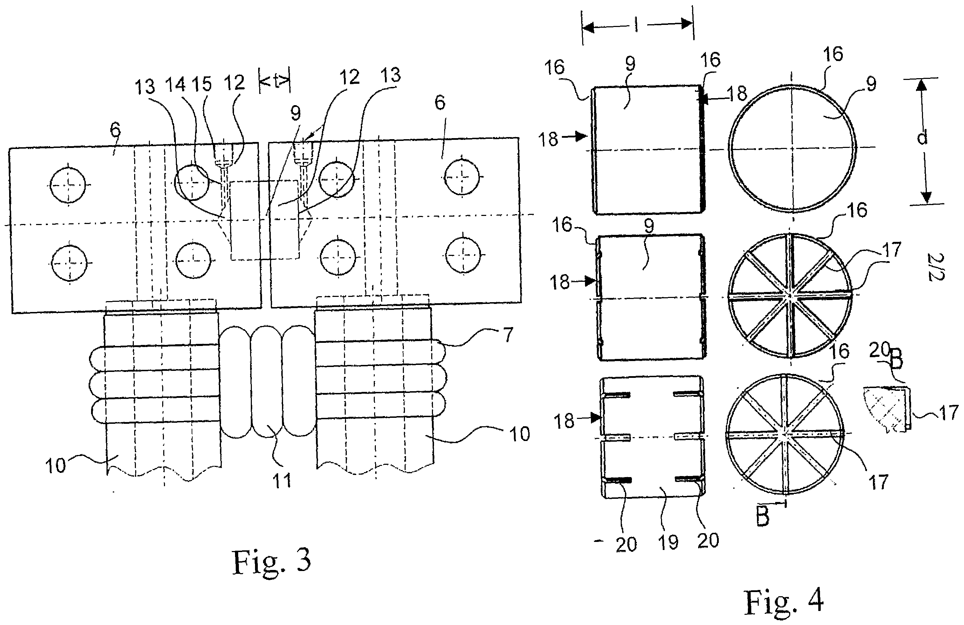

Hier setzt die Erfindung ein, und zwar so, wie dies insbesondere unter Zuhilfenahme von Figur 3 erläutert werden soll. Die beiden benachbart angeordneten Phasenverbindungsblöcke 6 verfügen über zwei einander zugewandte Seitenflächen. In diesen Seitenflächen sind gegenüberliegende Bohrungen angeordnet resp. vorgesehen. Die Bohrungen sind als zylindrische Bohrungen ausgebildet und verfügen am Boden jeweils über einen kegelförmigen Vertiefungsbereich 13. In diesen kegelförmigen Vertiefungsbereich mündet jeweils ein Anschlusskanal 14, welcher von einer freiliegenden Seitenfläche des Phasenverbindungsblockes 6 leicht zugänglich ist. Der Anschlusskanal 14 weitet sich gegen Ende weiter auf und in diesem aufgeweiteten zylindrischen Bereich ist zudem ein Innengewinde 15 vorgesehen. Das Innengewinde 15 ist dabei so ausgelegt, dass es erlaubt, einen Schlauch oder ein ähnliches Werkzeug mit einem Außengewinde zum Einbringen einer Masse zur Erzeugung einer stoffschlüssigen Verbindung fest anzuschliessen.

In den beiden Bohrungen 12 ist nun ein einstückiger Verbindungsstift 9 angeordnet, der als Kreiszylinder ausgebildet ist und dessen Achse im wesentlichen tangential zum Umfang des Stators verläuft. Der Verbindungsstift 9 dringt dabei über eine Tiefe t der Bohrung im jeweiligen Phasenverbindungsblock 6 in diesen ein. Dazwischen verbleibt typischerweise ein kleiner Abstand im Bereich von 2 mm bis 10 mm. Das heisst, die beiden benachbarten Phasenverbindungsblöcke berühren sich nicht und vorzugsweise ist die gesamte Länge des Verbindungsstiftes 9 grösser als die doppelte Eindringtiefe t, so dass ein Mindestabstand zwischen den beiden Blöcken 6 vorgegeben ist.

Bei der Montage wird nun so vorgegangen, dass in einen ersten Phasenverbindungsblock 6 ein solcher Verbindungsstift 9 eingeschoben wird und anschliessend der zweite Phasenverbindungsblock 6 mit seiner Bohrung 12 auf das aus dem ersten Block 6 herausragende Ende des Stiftes 9 aufgeschoben wird. Die in dieser Phase zwischen den beiden Phasenverbindungsblöcken 6 bestehende Verbindung ist eine Verbindung mit einem gewissen Spiel, das heisst, die beiden Blöcke 6 können immer noch entlang der Hauptachse des Verbindungselementes gegeneinander verschoben werden und in einem gewissen Umfang auch in anderen Richtungen und die beiden Phasenverbindungsblöcke 6 können um die Hauptachse des Verbindungselementes gegeneinander verdreht werden.

Dies erlaubt es, die weiteren Ausrichtungsarbeiten an den Rundverbindern 1 vorzunehmen und beispielsweise auch ein zusätzliches Verbindungselement 7, welches hier in dieser Figur in Form von Kordeln aus einem glasfaserverstärkten Kunststoff mit einer zentralen Umwicklung 11 ausgebildet ist, vorzunehmen. Typischerweise wird so vorgegangen, dass in dieser ersten Montagephase nun alle Rundverbinder 1 ausgerichtet werden, die entsprechenden zusätzlichen Fixierungen resp. Imprägnierungen vorgenommen werden und anschliessend die ganze Konstruktion, meist unter Einwirkung von Hitze, ausgehärtet wird.

In einem nächsten Schritt wird nun durch die beiden Anschlusskanäle 14 eine Kittmasse eingespritzt, dabei handelt es sich vorzugsweise um eine kaltaushärtende Kittmasse, beispielsweise auf Basis eines Epoxydharzes. Dies führt dazu, dass die Verbindung zwischen dem Verbindungsstift 9 und den beiden Phasenverbindungsblöcken 6 nun vollständig fixiert ist und starr wird. Dies genau in jenem relativen Orientierungszustand, der bei der optimalen Ausrichtung des gesamten Wicklungskopfes gegeben ist. So wird eine wesentlich erhöhte Steifigkeit, welche insbesondere auch bei hohen Betriebstemperaturen aufrechterhalten ist, gewährleistet, und Ermüdungserscheinungen sowie Brüche bei den Lötstellen können effizient verhindert werden.

Anhand von Figur 4 soll erläutert werden, wie unterschiedliche Ausgestaltungen des Verbindungsstiftes 9 möglich sind, um die stoffschlüssige Verbindung zwischen dem jeweiligen Phasenverbindungsblock 6 und dem Stift 9 optimal ausbilden zu können. Die einfachste Bauweise ist oben dargestellt, hier ist der Verbindungsstift 9 als einfacher Kreiszylinder ausgebildet. An der umlaufenden Kante ist eine Abschrägung oder Fase 16 ausgebildet, damit der Stift 9 einfacher in die Ausnehmung 12 eingeführt werden kann.

In der Mitte ist eine erste verbesserte Variante dargestellt. Hier wird die Stirnseite 18 des Kreiszylinders mit sternförmig angeordneten Rillen 17 versehen. Insbesondere in Kombination mit dem Vertiefungsbereich 13 ist es so möglich, in diese Rillen 17 sehr effizient das Material zur Ausbildung der stoffschlüssigen Verbindung einzutragen, und es wird eine grosse Oberfläche für diese stoffschlüssige Verbindung zur Verfügung gestellt.

Eine weitergehend verbesserte Ausführungsform ist unten in Figur 4 dargestellt. Hier ist zusätzlich zu den sternförmigen Rillen 17 an der Stirnseite jeweils am äusseren Ende der jeweiligen Rille 17 auch noch eine sich teilweise in axialer Richtung erstreckende Rille 20 in der Umfangsfläche vorgesehen. Diese Rille 20 ermöglicht es, dass das Material zur Erzeugung der stoffschlüssigen Verbindung nicht nur im Vertiefungsbereich 13 landet, sondern auch in den Rillen 17 und zusätzlich auch noch im Umfangsbereich des Verbindungsstifts 9.

Analoge rillenartige Vertiefungen können selbstverständlich auf der Innenfläche der Ausnehmungen vorgesehen werden, gegebenenfalls in Kombination mit den in Figur 4 dargestellten Rillen im Verbindungsstift, und unter Umständen sogar in koordinierter Weise zu diesen.

**BEZUGSZEICHENLISTE**

| | | | |
|---|---|---|---|
| 1 | Rundverbinder, Phasenverbindungsstäbe | 12 | Bohrung in 6 |
| | | 13 | Vertiefungsbereich in 12 |
| 2 | Abstützwinkel | 14 | Anschlusskanal |
| 3 | Anschluss | 15 | Innengewinde |
| 4 | Verbindungsabschnitt, Phasenverbindung | 16 | Fase |
| | | 17 | Rillen in Stirnseite |
| 5 | Achse des Stators | 18 | Stirnseite von 9 |
| 6 | Phasenverbindungsblock | 19 | Umfangsfläche von 9 |
| 7, 8 | Verbindungselement / Manschette | 20 | Rille in Umfangsfläche |
| 9 | Verbindungsstift | I | Länge von 9 |
| 10 | radialer Abschnitt von 1 | d | Durchmesser von 9 |
| 11 | Umwicklung | t | Tiefe der Bohrung in 6 |

## Patentansprüche

1. Wickelkopf für einen Stator einer elektrischen Maschine, welcher Wickelkopf wenigstens zwei Rundverbinder (1) umfasst, über welche der Strom von den Wicklungsstäben des Stators abgeführt wird, sowie eine Mehrzahl von Abstützwinkeln (2), über welche der Wickelkopf am Stator befestigt ist, wobei wenigstens zwei Rundverbinder (1) über einen radialen Abschnitt (10) verfügen, an dessen Ende jeweils ein Phasenverbindungsblock (6) angeordnet ist, und wobei wenigstens zwei Phasenverbindungsblöcke (6) einer Phase in Umfangsrichtung nebeneinander angeordnet sind,
**dadurch gekennzeichnet, dass**
die benachbarten Phasenverbindungsblöcke (6) über wenigstens ein stiftförmiges Element (9) verbunden sind, welches in Ausnehmungen (12) in den einander zugewandten Seitenflächen der Phasenverbindungsblöcke (6) wenigstens teilweise stoffschlüssig befestigt ist.

2. Wickelkopf nach Anspruch 1, **dadurch gekennzeichnet, dass** das stiftförmige Element (9) als Verbindungsstift mit kreiszylindrischer Außenfläche ausgebildet ist, und die Ausnehmungen (12) als zylindrische Sacklöcher ausgebildet sind, und dass die Befestigung des Verbindungsstifts (9) im wesentlichen ausschließlich stoffschlüssig ist.

3. Wickelkopf nach einem der vorhergehenden Ansprüche, **dadurch gekennzeichnet, dass** der Wickelkopf für drei Phasen ausgelegt ist und wenigstens drei Paare von Phasenverbindungsblöcken (6) aufweist, welche miteinander über jeweils ein stiftförmiges Element (9) verbunden sind, wobei vorzugsweise sechs Paare von Phasenverbindungsblöcken (6) vorhanden sind, und pro Phase jeweils zwei Paare von Phasenverbindungsblöcken (6) vorhanden sind, welche vorzugsweise in axialer Richtung hintereinander angeordnet sind.

4. Wickelkopf nach einem der vorhergehenden Ansprüche, **dadurch gekennzeichnet, dass** das stiftförmige Element (9) an der Stirnseite (18) Vertiefungen und/oder Rillen, vorzugsweise eine Mehrzahl von sternförmigen Rillen (17) aufweist, vorzugsweise in Kombination und Verbindung mit in der Umfangsfläche (19) angeordneten Vertiefungen und/oder Rillen (20), welche insbesondere bevorzugt an der Stirnseite beginnend in axialer Richtung des stiftförmigen Elementes (9) eine Länge aufweisen, welche kürzer ist, vorzugsweise wenigstens 2 mm bis 5 mm kürzer ist als die Tiefe (t) der Ausnehmung (12).

5. Wickelkopf nach einem der vorhergehenden Ansprüche, **dadurch gekennzeichnet, dass** das stiftförmige Element (9) einstückig ausgebildet ist und aus einem metallischen oder einem isolierenden Werkstoff besteht.

6. Wickelkopf nach einem der vorhergehenden Ansprüche, **dadurch gekennzeichnet, dass** das stiftförmige Element (9) aus Kunststoff, insbesondere aus glasfaserverstärktem Kunststoff besteht.

7. Wickelkopf nach einem der vorhergehenden Ansprüche, **dadurch gekennzeichnet, dass** das stiftförmige Element (9) als Verbindungsstift mit kreiszylindrischer Außenfläche ausgebildet ist, und die Ausnehmungen (12) als zylindrische Sacklöcher ausgebildet sind, wobei der Außendurchmesser des Verbindungsstifts im Bereich von 0,01 mm bis 2 mm geringer ist als der Innendurchmesser der Ausnehmung (12), und wobei vorzugsweise die Ausnehmungen (12) eine Eindringtiefe (t) für den Verbindungsstift im Bereich von 5 mm bis 40 mm, vorzugsweise im Bereich von 10 mm bis 30 mm aufweisen, und/oder wobei vorzugsweise der Verbindungsstift (9) eine Länge im Bereich von 10 mm bis 80 mm, vorzugsweise im Bereich von 20 mm bis 50 mm aufweist und/oder einen Durchmesser im Bereich von 5 mm bis 60 mm, vorzugsweise im Bereich von 20 mm bis 40 mm.

8. Wickelkopf nach einem der vorhergehenden Ansprüche, **dadurch gekennzeichnet, dass** die Ausnehmungen (12) als Sacklöcher in den Phasenverbindungsblöcken (6) ausgebildet sind, und dass in den Bodenbereich der Sacklöcher (12) ein von außen zugänglicher Anschlusskanal (14) mündet, wobei vorzugsweise der Bodenbereich einen Aufnahmeraum (13) aufweist, in welchen das stiftförmige Element (9), selbst wenn vollständig in die Ausnehmung (12) eingeschoben, nicht hineinragt.

9. Wickelkopf nach Anspruch 8, **dadurch gekennzeichnet, dass** der Anschlusskanal (14) über Mittel verfügt, mit Hilfe welcher eine Einbringungshilfe für das Material für die stoffschlüssige Befestigung am jeweiligen Phasenverbindungsblock (6) für die Befestigung des stiftförmigen Elementes (9) befestigt werden kann, wobei es sich bei dem Mittel vorzugsweise um ein in der Innenwand des Anschlusskanals (14) angeordnetes Innengewinde (15) handelt.

10. Wickelkopf nach einem der vorhergehenden Ansprüche, **dadurch gekennzeichnet, dass** das stiftförmige Element (9) unter Zuhilfenahme eines aushärtenden Kunststoffmaterials in den Ausnehmungen (12) befestigt ist, wobei es sich beim aushärtenden Kunststoffmaterial vorzugsweise um ein kalt aushärtendes Epoxidharz handelt.

11. Wickelkopf nach einem der vorhergehenden Ansprüche, **dadurch gekennzeichnet, dass** die radialen Abschnitte (10) von jeweils zu benachbart angeordneten Phasenverbindungsblöcken (6) geführten Rundverbindern (1) über wenigstens ein Verbindungselement (7) verbunden sind, wobei es sich bei dem Verbindungselement (7) vorzugsweise um Wicklungen aus Kordeln und/oder Streifen, vorzugsweise aus glasfaserverstärktem Kunststoffmaterial, handelt.

12. Wickelkopf nach einem der vorhergehenden Ansprüche, **dadurch gekennzeichnet, dass** zur Verbindung von zwei benachbarten Phasenverbindungsblöcken (6) wenigstens ein Verbindungsstift (9) angeordnet ist, dessen Hauptachse im wesentlichen tangential zum Umfang des Stators angeordnet ist.

13. Verfahren zur Montage eines Wickelkopfes nach einem der vorhergehenden Ansprüche, **dadurch gekennzeichnet, dass** in die Ausnehmung (12) des ersten Phasenverbindungsblocks (6) ein stiftförmiges Element (9) eingeschoben wird, und dass auf den aus dem ersten Phasenverbindungsblock (6) herausragenden Teil dieses stiftförmigen Elementes (9) anschließend die Ausnehmung (12) des zweiten benachbarten Phasenverbindungsblocks (6) aufgeschoben wird, dass die Rundverbinder (1) angeordnet, ausgerichtet und in ihrer endgültigen räumlichen Anordnung fixiert werden, wobei ein Verbindungsmaterial zur stoffschlüssigen Verbindung der stiftförmigen Elemente (9) entweder vor dem Einschieben des Elements (9) in die Ausnehmungen (12) eingebracht oder am Element (9) angebracht wird und/oder ein Verbindungsmaterial zur stoffschlüssigen Verbindung der stiftförmigen Elemente (9) über in den Bodenbereich der vorzugsweise als Sacklöcher (12) ausgebildeten Ausnehmungen mündende Anschlusskanäle (14) eingebracht wird.

14. Verfahren nach Anspruch 13, **dadurch gekennzeichnet, dass** der Bodenbereich der Sacklöcher (12) einen Aufnahmeraum (13) aufweist, in welchen das stiftförmige Element (9), selbst wenn vollständig in die Ausnehmung (12) eingeschoben, nicht hineinragt, und dass dieser Aufnahmeraum (13) sowie gegebenenfalls im stiftförmigen Element (9) und/oder in der Innenfläche der Ausnehmung (12) angeordnete Rillen (17, 20) und/oder Vertiefungen mit dem Verbindungsmaterial im wesentlichen aufgefüllt werden.

15. Verfahren nach einem der Ansprüche 13 oder 14, **dadurch gekennzeichnet, dass** es sich beim Verbindungsmaterial um ein Kunststoffmaterial handelt, vorzugsweise um ein aushärtendes Kunststoffmaterial, insbesondere um ein kalt härtendes Epoxidharz.

## Claims

1. End winding for a stator of an electrical machine, which end winding comprises at least two round connectors (1) via which the current is passed out from the winding bars of the stator, as well as a plurality of supporting brackets (2), via which the end winding is attached to the stator, wherein at least two round connectors (1) have a radial section (10) at whose end a phase connection block (6) is in each case arranged, and wherein at least two phase connection blocks (6) of one phase are arranged alongside one another in the circumferential direction,
**characterized in that**
the adjacent phase connection blocks (6) are connected via at least one element (9) which is in the form of a pin and is mounted at least partially integrally in recesses (12) in the mutually facing side surfaces of the phase connection blocks (6).

2. End winding according to Claim 1, **characterized in that** the element (9) which is in the form of a pin is in the form of a connection pin with a circular-cylindrical outer surface, and the recesses (12) are in the form of cylindrical blind holes, and **in that** the attachment of the connection pin (9) is essentially exclusively integral.

3. End winding according to one of the preceding claims, **characterized in that** the end winding is designed for three phases and has at least three pairs of phase connection blocks (6) which are connected to one another via in each case one element (9) which is in the form of a pin, wherein six pairs of phase connection blocks (6) are preferably provided, and in each case two pairs of phase connection blocks (6) are provided per phase and are preferably arranged one behind the other in the axial direction.

4. End winding according to one of the preceding claims, **characterized in that** the element (9) which is in the form of a pin has depressions and/or grooves on the end face (18), preferably a plurality of grooves (17) in the form of a star, preferably in combination and in conjunction with depressions and/or grooves (20) which are arranged in the circumferential surface (19) and in particular preferably have a length, starting on the end face in the axial direction of the element (9) which is in the form of a pin, which is shorter, preferably at least 2 mm to 5 mm shorter, than the depth (t) of the recess (12).

5. End winding according to one of the preceding claims, **characterized in that** the element (9) which is in the form of a pin is formed integrally and is composed of a metallic material or an insulating material.

6. End winding according to one of the preceding claims, **characterized in that** the element (9) which is in the form of a pin is composed of plastic, in particular glass-fiber-reinforced plastic.

7. End winding according to one of the preceding claims, **characterized in that** the element (9) which is in the form of a pin is in the form of a connection pin with a circular-cylindrical outer surface, and the recesses (12) are in the form of cylindrical blind holes, wherein the external diameter of the connection pin is in the range from 0.01 mm to 2 mm less than the internal diameter of the recess (12), and wherein the recesses (12) preferably have a penetration depth (t) for the connection pin in the range from 5 mm to 40 mm, preferably in the range from 10 mm to 30 mm, and/or wherein the connection pin (9) preferably has a length in the range from 10 mm to 80 mm, preferably in the range from 20 mm to 50 mm, and/or has a diameter in the range from 5 mm to 60 mm, preferably in the range from 20 mm to 40 mm.

8. End winding according to one of the preceding claims, **characterized in that** the recesses (12) are in the form of blind holes in the phase connection blocks (6), and **in that** an externally accessible connecting channel (14) opens into the bottom area of the blind holes (12), wherein, preferably the bottom area has an accommodation area (13) into which the element (9) which is in the form of a pin does not project, even when it is being pushed completely into the recess (12).

9. End winding according to claim 8, **characterized in that** the connecting channel (14) has means with the aid of which an introduction aid for the material for the interlocking attachment can be attached to the respective phase connection block (6) for the attachment of the element (9) which is in the form of a pin, with the means preferably being an internal thread (15) which is arranged in the inner wall of the connecting channel (14).

10. End winding according to one of the preceding claims, **characterized in that** the element (9) which is in the form of a pin is mounted in the recesses (12) with the assistance of a curing plastic material, wherein the curing plastic material is preferably a cold-curing epoxy resin.

11. End winding according to one of the preceding claims, **characterized in that** the radial sections (10) of round connectors (1) which are each guided with respect to phase connection blocks (6) which are arranged adjacent, are connected via at least one connection element (7), wherein the connection element (7) preferably comprises windings composed of knurling and/or strips, preferably composed of glass-fiber-reinforced plastic material.

12. End winding according to one of the preceding claims, **characterized in that** at least one connection pin (9) is arranged for connection of two adjacent phase connection blocks (6), and its major axis is arranged essentially tangentially to the circumference of the stator.

13. Method for fitting an end winding according to one of the preceding claims, **characterized in that** an element (9) which is in the form of a pin is pushed into the recess (12) in the first phase connection block (6), and **in that** the recess (12) in the second adjacent phase connection block (6) is then pushed onto that part of this element (9) which is in the form of a pin that projects out of the first phase connection block (6), **in that** the round connectors (1) are arranged, aligned and fixed in their final spatial arrangement, wherein a connection material for integral connection of the elements (9) which are in the form of pins is either introduced into the recesses (12) before the element (9) is pushed in or is applied to the element (9), and/or a connection material for integral connection of the elements (9) which are in the form of pins is introduced via connecting channels (14) which open into the bottom area of the recesses, which are preferably in the form of blind holes (12).

14. Method as clamed in Claim 13, **characterized in that** the bottom area of the blind holes (12) has an accommodation area (13) into which the element (9) which is in the form of a pin does not project, even when it has been pushed completely into the recess (12), and **in that** this accommodation area (13) as well as grooves (17, 20), which may be arranged in the element (9) which is in the form of a pin and/or may be arranged in the inner surface of the recess (12), and/or depressions are essentially filled with the connection material.

15. Method according to one of Claims 13 or 14, **characterized in that** the connection material is a plastic material, preferably a curing plastic material, and in particular a cold-curing epoxy resin.

## Revendications

1. Tête d'enroulement pour le stator d'une machine électrique, la tête d'enroulement comportant
au moins deux raccords circulaires (1) par lesquels le courant est évacué des barreaux d'enroulement du stator ainsi que plusieurs coudes de soutien (2) par lesquels la tête d'enroulement est fixée sur le stator,
au moins deux raccords circulaires (1) disposant d'une partie radiale (10) à chacune des extrémités de laquelle est disposé un bloc (6) de liaison de phase, au moins deux blocs (6) de liaison de phase d'une phase étant disposés l'un à côté de l'autre dans la direction périphérique,
**caractérisée en ce que**
les blocs (6) de liaison de phase voisins sont reliés au moins en partie en correspondance de matière par au moins un élément (9) en forme de tige qui est fixé dans des découpes (12) ménagées dans les surfaces latérales tournées l'une vers l'autre des blocs (6) de liaison de phase.

2. Tête d'enroulement selon la revendication 1,
**caractérisée en ce que** l'élément (9) en forme de tige est configuré comme tige de liaison à surface extérieure en cylindre circulaire, les découpes (12) étant configurées comme trous cylindriques aveugles et **en ce que** la fixation de l'élément (9) en forme de tige est essentiellement exclusivement en correspondance de matière.

3. Tête d'enroulement selon l'une des revendications précédentes, **caractérisée en ce que** la tête d'enroulement est conçue pour trois phases et présente au moins trois paires de blocs (6) de liaison de phase qui sont reliées chaque fois par au moins un élément (9) en forme de tige, de préférence six paires de blocs (6) de liaison de phase étant prévues et par phase deux paires de blocs (6) de liaison de phase sont prévues et sont disposées de préférence l'une derrière l'autre dans la direction axiale.

4. Tête d'enroulement selon l'une des revendications précédentes, **caractérisée en ce que** l'élément (9) en forme de tige présente sur son côté frontal (18) des creux et/ou des rainures, de préférence plusieurs rainures (17) en étoile, de préférence en combinaison et en liaison avec des creux et/ou rainures (20) disposés dans la surface périphérique (19) et qui présente de façon particulièrement préférable en partant du côté frontal et dans la direction axiale de l'élément (9) en forme de tige une longueur plus courte et de préférence plus courte d'au moins 2 mm à 5 mm que la profondeur (t) de la découpe (12).

5. Tête d'enroulement selon l'une des revendications précédentes, **caractérisée en ce que** l'élément (9) en forme de tige est formé d'un seul tenant et est constitué d'un matériau métallique ou d'un matériau isolant.

6. Tête d'enroulement selon l'une des revendications précédentes, **caractérisée en ce que** l'élément (9) en forme de tige est réalisé en matière synthétique et en particulier en matière synthétique renforcée de fibres de verre.

7. Tête d'enroulement selon l'une des revendications précédentes, **caractérisée en ce que** l'élément (9) en forme de tige est configuré comme tige de liaison à surface extérieure cylindrique circulaire et les découpes (12) sont configurées comme trous cylindriques aveugles, le diamètre extérieur de la tige de liaison étant plus petit de l'ordre de 0,01 mm à 2 mm que le diamètre intérieur de la découpe (12), les découpes (12) présentant de préférence une profondeur de pénétration (t) de la tige de liaison de l'ordre de 5 mm à 40 mm et de préférence de l'ordre de 10 mm à 30 mm et/ou la tige de liaison (9) présente une longueur de l'ordre de 10 mm à 80 mm, de préférence de l'ordre de 20 mm à 50 mm et/ou un diamètre de l'ordre de 5 mm à 60 mm et de préférence de l'ordre de 20 mm à 40 mm.

8. Tête d'enroulement selon l'une des revendications précédentes, **caractérisée en ce que** les découpes (12) sont configurées comme trous aveugles ménagés dans les bloc (6) de liaison de phase et **en ce que** au niveau du fond des trous aveugles (12) débouche un canal de raccordement (14) accessible de l'extérieur, le niveau du fond présentant un espace de réception (13) dans lequel l'élément (9) en forme de tige ne pénètre pas même lorsqu'il est enfoncé complètement dans la découpe (12) .

9. Tête d'enroulement selon la revendication 8, **caractérisée en ce que** le canal de raccordement (14) dispose de moyens qui permettent de fixer un accessoire de placement du matériau de fixation en correspondance de matière sur le bloc (6) de liaison de phase concerné en vue de la fixation de l'élément (9) en forme de tige, les moyens étant de préférence un filetage intérieur (15) ménagé dans la paroi intérieure du canal de raccordement (14).

10. Tête d'enroulement selon l'une des revendications précédentes, **caractérisée en ce que** l'élément (9) en forme de tige est fixé dans les découpes (12) en recourant à une matière synthétique durcissable, la matière synthétique durcissable étant de préférence une résine époxy durcissant à froid.

11. Tête d'enroulement selon l'une des revendications précédentes, **caractérisée en ce que** les sections radiales (10) de raccord circulaire (1) amené à des blocs (6) de liaison de phase voisins sont reliées par au moins un élément de liaison (7), l'élément de liaison (7) étant de préférence formé d'enroulements de corde et/ou de ruban, de préférence en matière synthétique renforcée de fibres de verre.

12. Tête d'enroulement selon l'une des revendications précédentes, **caractérisée en ce qu'**au moins une tige de liaison (9) dont l'axe principal est disposé essentiellement tangentiellement par rapport à la périphérie du stator est disposée pour relier deux blocs (6) de liaison de phase voisins.

13. Procédé de montage d'une tête d'enroulement selon l'une des revendications précédentes, **caractérisé en ce qu'**un élément (9) en forme de tige est enfoncé dans la découpe (12) du premier bloc (6) de liaison de phase et **en ce que** la découpe (12) du deuxième bloc (6) de liaison de phase voisin est ensuite enfichée sur la partie de cet élément (9) en forme de tige qui déborde hors du premier bloc (6) de liaison de phase, **en ce que** les raccords circulaire (1) sont alignés et immobilisés dans leur agencement spatial final, un matériau de liaison qui assure la liaison en correspondance de matière des éléments (9) en forme de tige est inséré dans les découpes (12) avant l'insertion de l'élément (9) dans les découpes (12) ou placées sur l''élément (9) et/ou un matériau de liaison assurant la liaison en correspondance de matière des éléments (9) en forme de tige est introduit par l'intermédiaire de canaux de raccordement (14) qui débouchent au niveau du fond des découpes configurées de préférence comme trous aveugles (12) .

14. Procédé selon la revendication 13, **caractérisé en ce que** le niveau du fond des trous aveugles (12) présente un espace de réception (13) dans lequel l'élément (9) en forme de tige ne déborde pas même lorsqu'il est complètement enfoncé dans la découpe (12) et **en ce que** cet espace de réception (13) ainsi que des rainures (17, 20) et/ou des creux éventuellement disposés dans l'élément (9) en forme de tige et/ou dans la surface intérieure de la découpe (12) sont essentiellement remplis par le matériau de liaison.

15. Procédé selon l'une des revendications 13 ou 14, **caractérisé en ce que** le matériau de liaison est une matière synthétique, de préférence une matière synthétique durcissable et en particulier une résine époxy durcissant à froid.
